# EUROPEAN PATENT APPLICATION

(11) **EP 2 578 510 A1**
(43) Date of publication of application: **10.04.2013**
(21) Application number: 11791759.1
(22) Date of filing: 20.05.2011
(51) Int. Cl.: B65D 41/00, A63H 33/08

(54) **CAP RE-USABLE AS INTERLOCKING BUILDING BLOCKS**

(30) Priority: 07.06.2010 BR PI1001938
(71) Applicant: Moura, Solange Maio, 22631-051 Rio de Janeiro - RJ (BR)
(72) Inventor: VOLLERS, Claudio, Patrick, 25976-810 Teresópolis - RJ (BR); NOGUEIRA, Leonardo, Garcia, 24210-520 Niterói - RJ (BR)
(74) Representative: Carvalho Franco, Isabel
(86) International application number: PCT/BR2011/000148
(87) International publication number: WO 2011/153598

(57) **Abstract**

The invention pertains to the field of caps and toys designed as building blocks, and relates in particular to a functional cap that can be re-used as a playing toy designed as interlocking or stackable blocks after the cap has been used for sealing packaging containers. The cap comprises a body (1) with a top surface (2) provided with projections (3) that can take the shape of rings, pins or any other shapes that fit into recesses or cavities (4) provided in the lower region of the body (1) or in structures provided in the sidewalls (5) thereof.

## Description

The present invention relates to the field of caps (International Patent Classification [IPC] B65D-41/00) and toys in the form of building blocks provided with complementary holes, grooves or projections (IPC A63H-33/08), and it has been developed to broaden the use and functionality of packaging caps in general, besides allowing for their reuse without the need to go through any prior industrial process of recycling, producing economic and ecological benefits deriving both from savings of electrical energy used in the transformation industry and minimizing of plastic cap wastes in the environment.

As is generally known, plastics (especially thermoplastics) are made from resins (polymers), generally synthetic ones derived from petroleum, and they can be reprocessed various times by any methods of transformation, for which reason they are broadly used in industry in general, including the manufacture of packages in the form of bottles and their respective caps, for packaging of the most diverse products.

Since plastic takes more than 400 years to decompose in the environment, its recycling is highly recommended as a means of ecology preservation; however, the recycling process as well - which can be primary (or pre-consumption, making use of production scraps), secondary (or post-consumption, involving materials coming from dumpsites, sorting, scrap heaps, etc., which need to be properly cleaned and sorted in order to be utilized), or tertiary (which transforms plastic wastes into chemical products and fuels by means of thermochemical processes) - demands the use of natural resources such as water and electrical energy in significant quantities, which makes the reusing of the caps, when possible, an even more correct activity as regards the protection of the environment.

This fact has led the industry - especially the packaging industry, in which we emphasize specifically the area of manufacture of closure caps for various containers - to develop products which can be reused for other purposes after the end of the use for which they were initially produced. Thus, the first caps able to be reused as play things primarily for children came into being, the most important of which for the present invention emerge from the following documents (indicated with their respective priority dates):
- WO 0055063 of 2 Mar 1999 and AU 763612 of 17 Jul 2000 specify caps with surfaces having a plurality of projections and recesses to enable a stacking of similar caps for use as building blocks. However, the caps are joined together merely by stacking, that is, top and bottom interlocking, without any lateral interlocking or fixation element;
- US 5361919 of 8 Nov 1994 presents caps provided with corners, cavities and ribs along their entire surface, which can be joined together to build various structures. They are caps of complex structure, which can increase their costs, as well as make assembly difficult for small children;
- WO 9967151 of 24 Jun 1998 comprises a ring having identical and self-interlocking lateral structures making possible the lateral joining of various similar caps, not allowing for a stacking of the caps, but only the construction of planar objects.

It is seen that despite enabling a reusing of the caps as "building block" type toys, such caps have certain drawbacks which limit their utility: they have restricted construction possibilities, since the fitting between the caps can only be done in the manner of top + bottom or side + side; when a top + bottom and side + side connection is possible, they have an extremely complex configuration that may make the product more costly and impede its reuse; and they do not have any other purpose beyond serving as a sealing cap and building blocks.

Thus, taking into account these drawbacks and in order to solve them, the functional cap was developed, able to be reused as a play thing in the form of interlocking/stackable building blocks after being used as a sealing elements for packages, being the object of the present invention, comprised of a plastic cap having connection elements on all its surfaces - top, side and/or bottom - molded directly on the cap, making it possible to produce top + bottom, top + top, side + side and side + top connections, thereby providing countless design possibilities.

The lower edges of the caps can also have, on the inside, positioning elements able to facilitate the interlocking and the assembly of the structures, it being also possible for there to be a central cylinder located at the internal part of the cap, which can simultaneously perform two distinct functions: to facilitate the top + bottom interlocking and to be used as a compartment to hold small giveaways for children (such as, for example, figurines, confetti, glue or any small objects), optionally sealed with removable plastic film or a similar element.

The cap can also be produced with a central planar region on its upper (top) surface to contain informational, illustrative and/or advertising elements of any kind. Furthermore, said top surface can contain connection elements similar to those existing on the lateral surfaces of the cap to further broaden the possibilities of building various toy structures. It is pointed out that the great increase in fixation provided by the joining of the lateral to the upper fixation can create caps/objects which, besides serving as a toy, can be used to construct functional caps such as benches or stairs, among others.

Thus, one purpose of the present invention is to provide a cap with connection structures molded directly and simultaneously on any given surfaces of its body.

Another purpose of the invention is to provide a cap able to be connected to others without limitation, that is, enabling a joining of any of its surfaces to any surface of an identical cap.

Another purpose of the invention is to provide a cap that can contain rails, pins, holes or cavities for interlocking, whether or not provided with positioning elements to facilitate the assembly.

Another purpose of the invention is to provide a cap that can contain regions designed to hold inscriptions, illustrations or information of any kind.

Another additional purpose is to provide a cap that can contain an internal positioning and/or compartmentalization cylinder for small objects of any kind, said cylinder being able to be closed with removable plastic film or a similar element.

Another purpose of the invention is to provide a cap of simple, easy, economical and therefore accessible construction.

Another purpose is to enable the construction of toy or functional caps of any kind, also utilizing the container itself that comes with the cap, further optimizing the reutilization of materials that have tremendous pollution potential for the environment.

It will therefore be appreciated that the cap of the present invention is provided with the necessary singular and unprecedented characteristics of innovation for inventive activity.

Thus, in its most general form, the present invention provides a functional cap, able to be reused as a play toy in the form of interlocking/stackable blocks after its use as a package sealing element, characterized in that it comprises a body with top surface provided with projections able to have the shape of rings, pins or any other shape, which fit into cavities or gaps present in the lower region of the body or in structures present on its lateral walls.

In a preferred embodiment of the cap according to the invention, the body is cylindrical and the planar top surface is provided with projections in the form of rings, pins, or various geometrical shapes, arranged so as to produce tracks for fitting the lower edge of the lateral skirt of the body of a similar cap.

In another preferred embodiment of the cap according to the invention, the body has a substantially quadrangular cross section, with the top surface provided with projections able to have the shape of rings, pins or any other shape, which fit into cavities or gaps present in the lower region of the body or in structures present on its lateral walls.

In another preferred embodiment of the cap according to the invention, the body has connection elements on all its surfaces - upper, lateral and/or lower - molded directly in its structure.

In another preferred embodiment of the cap according to the invention, the projections, the pins or the gaps occupy the total surface area of the body.

In another preferred embodiment of the cap according to the invention, the projections, the pins or the gaps occupy only the peripheral region of the surface so that the central region remains free to receive inscriptions, engravings, or various applications.

In another preferred embodiment of the cap according to the invention, the body has a lateral skirt provided with interlocking projections of the male and female type.

In another preferred embodiment of the cap according to the invention, the body has a lateral skirt provided with vertical locking elements that are identical and self-coupling to each other.

In another preferred embodiment of the cap according to the invention, the surface of the body has four perimeter projections arranged around a central projection.

In another preferred embodiment, the cap contains two perimeter projections provided with "male" type projections for coupling in the "female" type internal region of the other projections.

In another preferred embodiment of the cap according to the invention, the perimeter projections contain proximal cavities located in mutually orthogonal positions for coupling of the positioners present at the lower end of the internal surface of the body.

In another preferred embodiment of the cap according to the invention, the cavities and the positioners have any given geometrical conformation, as long as they are self-coupling.

In another preferred embodiment of the cap according to the invention, the body contains an inner cylinder as an auxiliary element for coupling of the caps.

In another preferred embodiment of the cap according to the invention, the inner cylinder is employed as a compartment for placement of any given objects and closed by removable plastic film or similar sealing element.

In another preferred embodiment of the cap according to the invention, the body contains interlocking elements arranged on its upper surface.

As an illustration and for better understanding, the cap of the present invention shall be better described and illustrated on the basis of the appended drawings, where:
Figures 1.1, 1.2 and 1.3 show a first design possibility of the cap of the invention, respectively in single perspective view, in assembled perspective view, and in top view, the cap being provided with a region to contain any given illustrative or informative material and projections which make possible a top to top fitting;
Figures 2.1 and 2.2 show another design possibility of the cap of the invention, provided with lateral connectors of male and female type, respectively, shown in perspective and in top view, the latter showing one possibly assembly of the caps;
Figures 3.1 and 3.2 show another design possibility of the cap of the invention, provided with identical lateral connectors, respectively shown in perspective and in top view, the latter showing one possibility of assembly of the caps;
Figures 4.1, 4.2, 4.3 and 4.4 show another design possibility of the caps of the invention, fitted together and provided with fitting pins and an inner cylinder which can be used as a compartment for any kind of giveaways, shown respectively in top perspective, in bottom perspective, in top and in side view;
Figures 5.1, 5.2, 5.3, 5.4 and 5.5 show another possibility of the cap of the invention, respectively shown in unit perspective, in perspective of one cap entirely assembled on another, in perspective of one cap partly assembled on another, and in perspective of several caps partially assembled on others;
Figures 6.1, 6.2, 6.3 and 6.4 show another possibility of the cap of the invention provided with positioners, respectively seen in perspective, in partial cutaway, in top and in bottom view.
Figures 7.1, 7.2 and 7.3 show another design possibility of the cap of the present invention, respectively seen in top perspective, in bottom perspective, and in perspective view of a structure built from various of the caps illustrated in Fig. 7.1;
Figures 8.1, 8.2 and 8.3 show another design possibility of the cap of the present invention seen respectively in top perspective, in bottom perspective, and in perspective view of a structure built from various of the caps illustrated in Fig. 8.1;
Figures 9.1, 9.2 and 9.3 show another design possibility of the cap of the present invention seen respectively in top perspective, in bottom perspective, and in perspective view of a structure built from various of the caps illustrated in Fig. 9.1; and
Figures 10.1, 10.2 and 10.3 show another design possibility of the cap of the present invention seen respectively in top perspective, in bottom perspective, and in perspective view of a structure built from various of the caps illustrated in Fig. 10.1.

It should be emphasized that the drawings shown are merely for illustration and not limitation, since the various component elements shown can be mixed together in various other configurations without thereby escaping the scope of the desired protection.

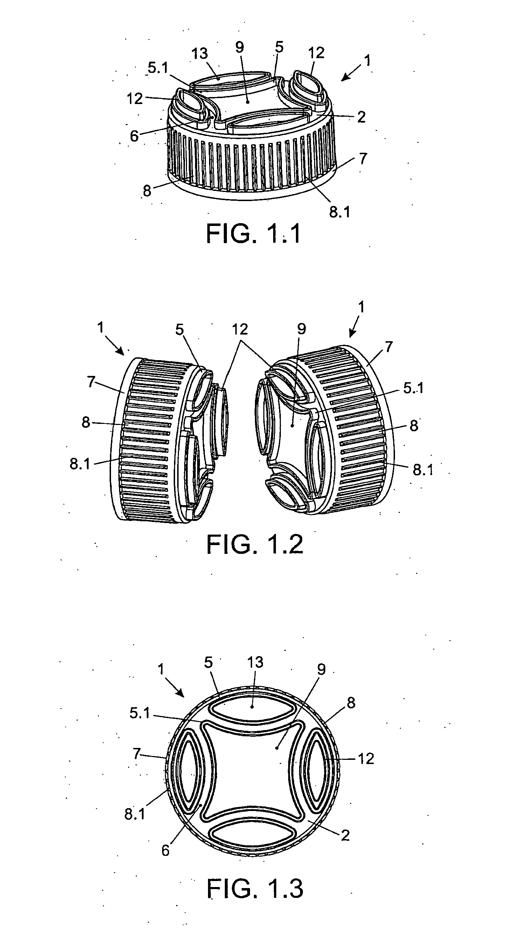

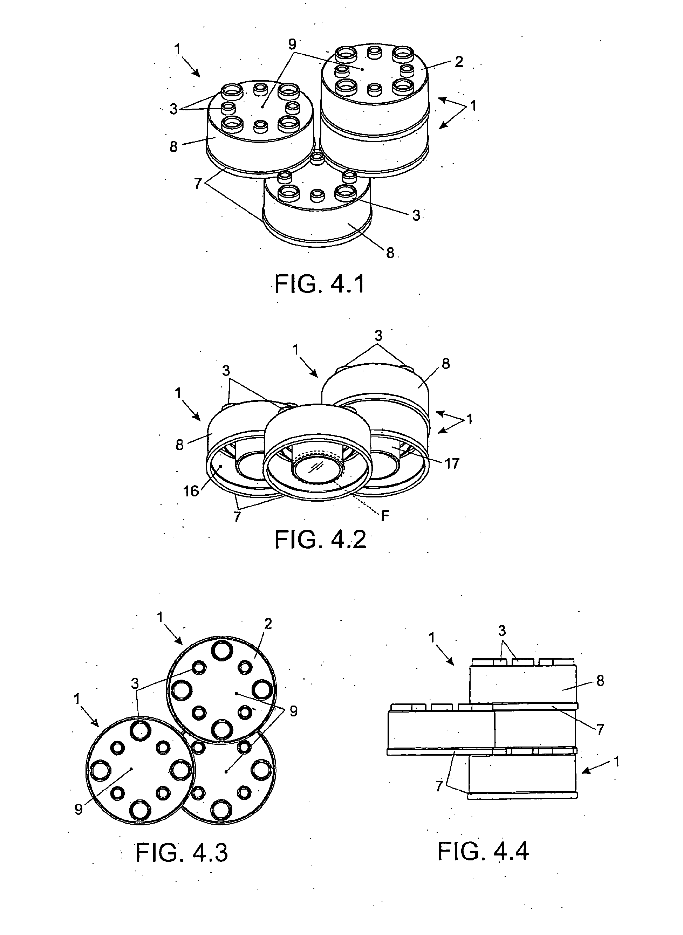

This, in keeping with what is illustrated in particular by the aforementioned figures 1.1 to 6.4, the functional cap, able to be reused as a play toy in the form of interlocking/stackable blocks after its use as a package sealing element of the present invention, is comprised of: a cylindrical body 1 with planar top surface 2 provided with projections 3 in the shape of rings 3, pins 4 or other geometrical shapes 5 arranged so as to produce tracks 6 for the fitting of the lower edge 7 of the lateral skirt 8 of the body 1 of a similar cap. These projections can occupy only the peripheral region of the surface 1 so that the central region 9 remains free to optionally receive inscriptions, engravings or applications of informational, advertising and/or any informational content, or optionally to occupy its entire area.

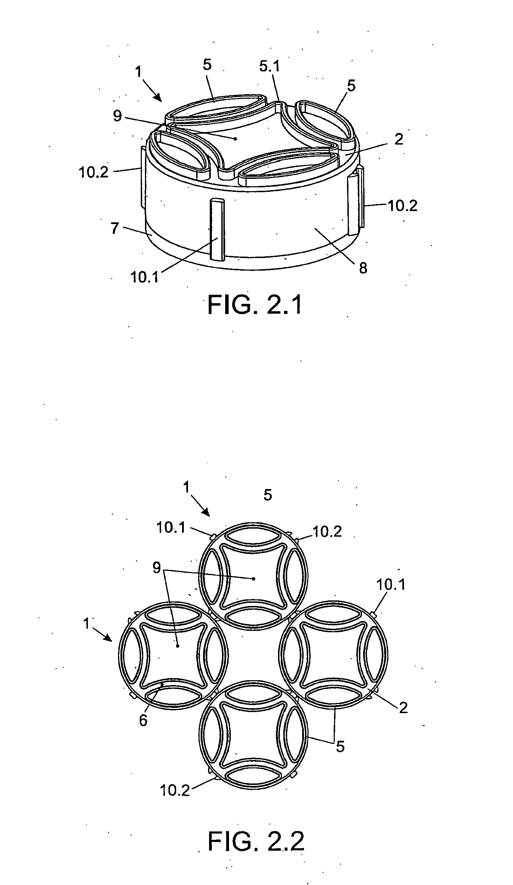

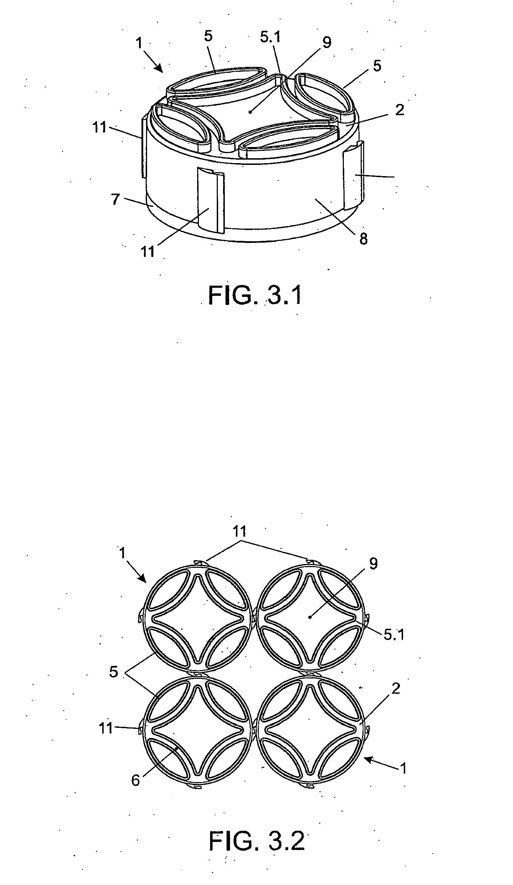

The lateral skirt 8 of the cap can contain vertical ribs 8.1, arranged on its entire extent, or it can be smooth and provided with fitting projections of male 10.1 and female 10.2 type to enable the lateral coupling of the caps, as illustrated in figures 2.1 and 2.2. Figures 3.1 and 3.2 also demonstrate caps able to be coupled by the lateral surfaces 8, but provided with vertical and identical fitting elements 11 that are fitted together.

Figures 1.1, 1.2 and 1.3 show one version provided with four perimeter projections 5 arranged around a central projection 5.1 to form the rails that bound the tracks 6, two of these being provided with "male" type projections 12 for coupling in the inner "female" type region 13 of the other projections 13. This configuration makes possible a coupling of the caps in a top + top format, which allows the containers that come with the caps to also become part of the structures built with the "toy cap" presented here. It is also important to mention that the geometry of figures 1 to 3 has a form favorable to assembling 4 caps in the upper part, and this favors the assembly of the caps on all sides, while such a geometry also enables the joining/coupling of caps with and without lateral locks.

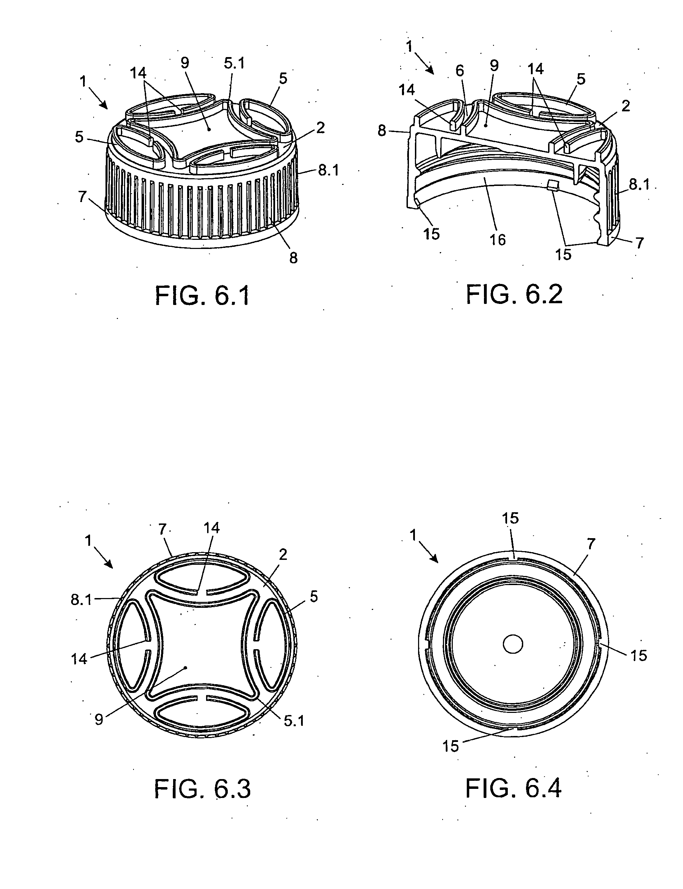

The illustrations of figures 6.1 to 6.4 show that the mentioned perimeter projections 5 can contain proximal cavities 14 located in mutually orthogonal positions for coupling of the positioners 15 present at the lower end of the inner surface 16 of the body 1. It should be emphasized that both the cavities 14 and the positioners 15 can have any given geometrical configuration, as long as they are self-coupling.

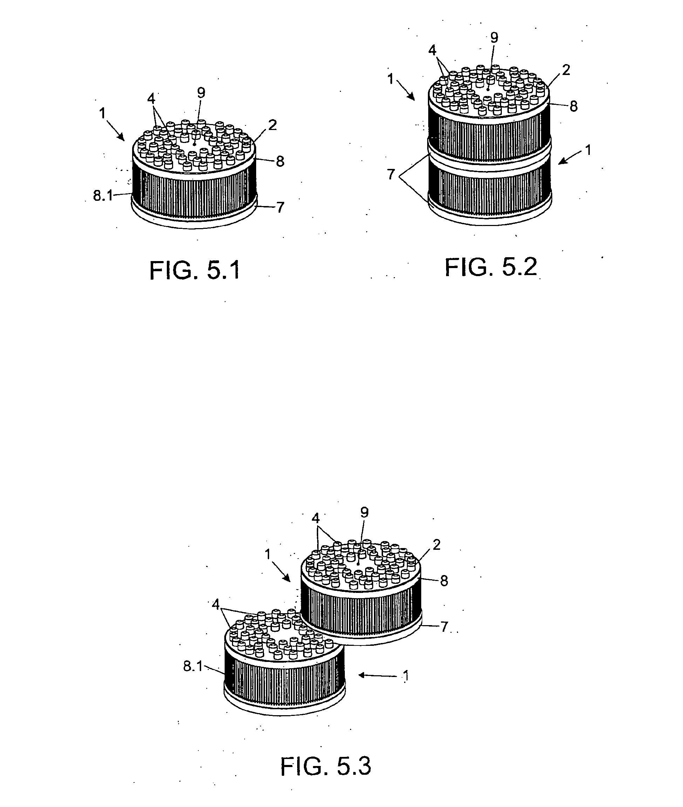

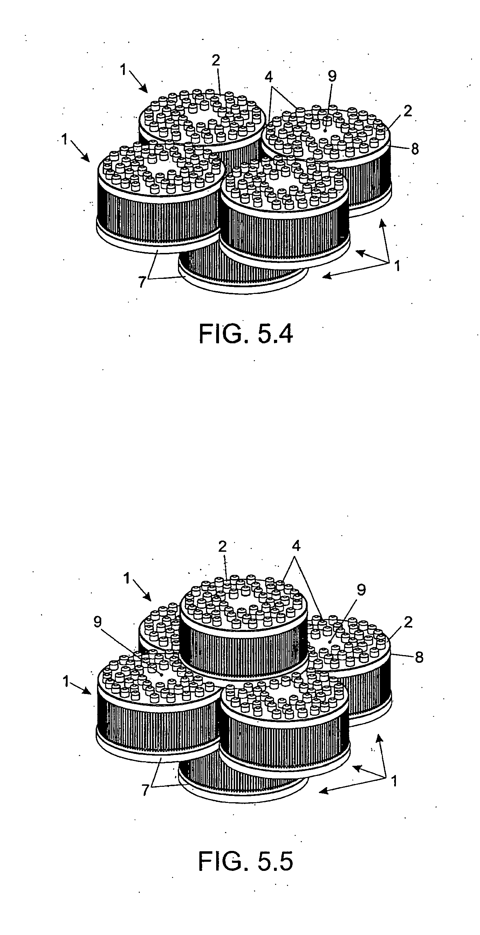

The design shape of the cylindrical body 1 with top surface 2 provided with pins 4 is illustrated in figures 5.1 to 5.5., where said pins 4 can be present in countless numbers and possible locations.

Another design option for the cap presented here involves the presence of an inner cylinder 17 which, although shown here alongside the configuration provided with projections in the form of rings 3, can be incorporated into any of the possible configurations and that can be used as a compartment for placement of giveaways or any small objects - in which case it can be closed by removable plastic film F or similar sealing element.

The caps can also be produced with fitting elements 10.1, 10.2 or 11 arranged on the upper surface 2 to enable the coupling of the caps in the side + top form, and thus further broaden the design options for the structures.

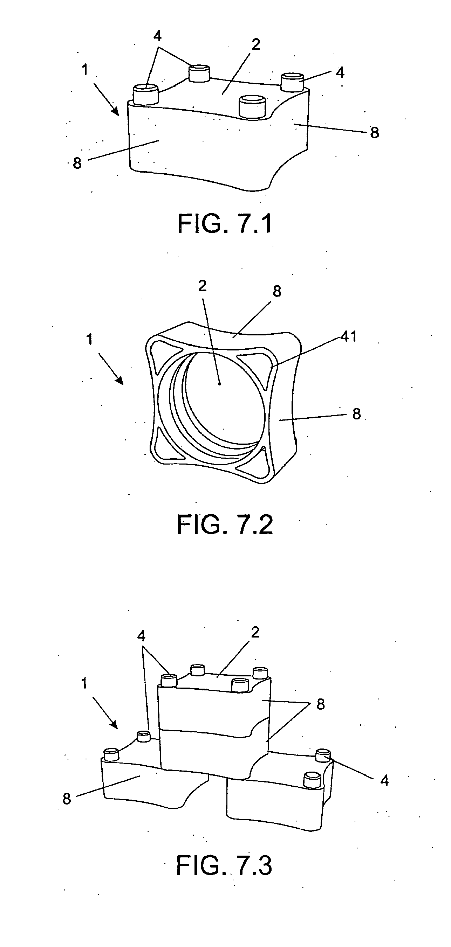

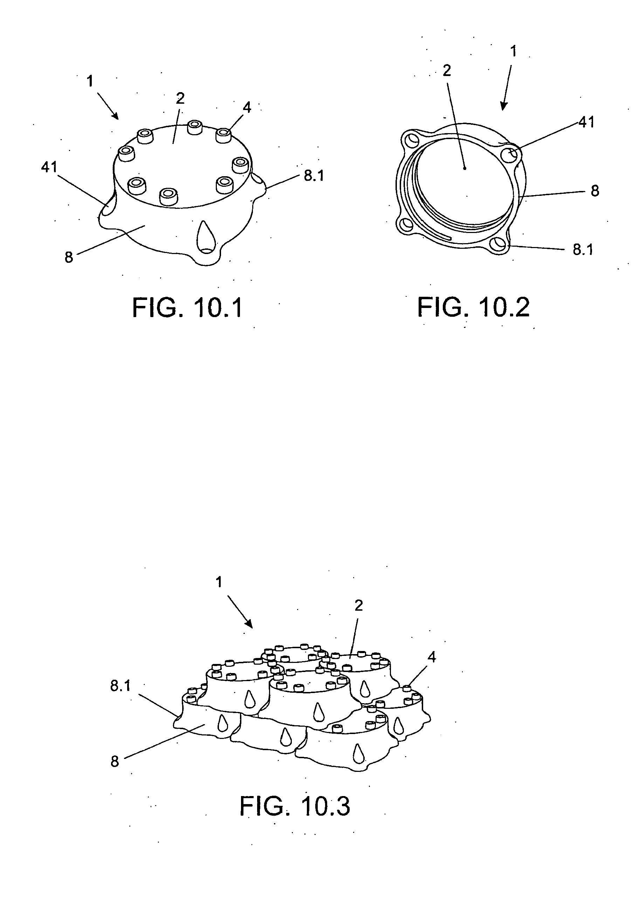

Thus, in keeping with what is illustrated, especially by the aforementioned figures 7.1 to 10.3, the functional cap, able to be reused as a play toy in the form of interlocking/stackable blocks after its use as a package sealing element of the present invention, is comprised of a body 1 - which can have an essentially quadrangular cross section or any other geometrical conformation - with top surface 2 provided with projections 4 able to have the shape of rings, pins or any other shapes, that are fitted into cavities or gaps 41 present in the lower region of the body 1 or in structures present on its lateral walls 8.

Preferably, the coupling between the projections 4 and the cavities or gaps 41 can be done by a male/female system or other adequate coupling system.

Said projections 3 can occupy only the peripheral region of the surface 1 or its entire area, and they can also be constructed on the lateral walls 8 of the body 1 to enable greater design versatility for the resulting structures.

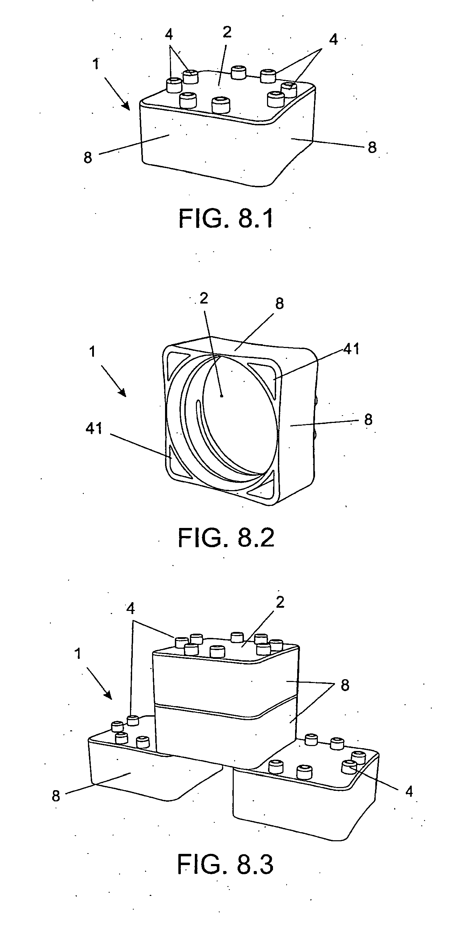

It should also be clarified that the cavities or gaps 41 can have the same format as the projections 4 or different shapes, as long as they enable a coupling of the projections 4 on the inside - as can be seen, for example, in figures 7.2 and 8.2, which have cavities of essentially triangular section on the inside by which they are coupled to the projections 4 which, in the figures shown, have a cylindrical conformation.

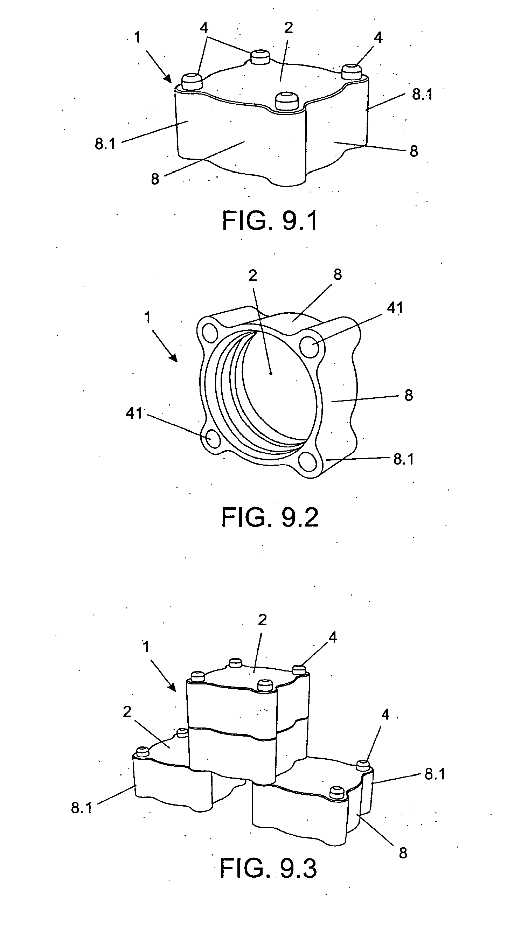

Figures 9.1 to 9.3 illustrate one specific cap in which a basically circular body has cylindrical structures 8.1 arranged orthogonally, producing an essentially quadrangular cap, while said structures accommodate self-coupling projections 4 and lower cavities 41.

## Claims

1. Functional cap, able to be reused as a play toy in the form of interlocking/stackable blocks after its use as a package sealing element, **characterized in that** it comprises a body (1) with top surface (2) provided with projections (3) able to have the shape of rings, pins or any other shape, which fit into cavities or gaps (4) present in the lower region of the body (1) or in structures present on its lateral walls (5).

2. Cap according to claim 1, **characterized in that** the body (1) is cylindrical and the planar top surface (2) is provided with projections in the form of rings (3), pins (4), or various geometrical shapes (5), arranged so as to produce tracks (6) for fitting the lower edge (7) of the lateral skirt (8) of the body (1) of a similar cap.

3. Cap according to claim 1, **characterized in that** the body (1) has a substantially quadrangular cross section, with the top surface (2) provided with projections (3) able to have the shape of rings, pins or any other shape, which fit into cavities or gaps (4) present in the lower region of the body (1) or in structures present on its lateral walls (5).

4. Cap according to any one of claims 1 to 3, **characterized in that** the cavities or gaps (4) have the same format as the projections (3).

5. Cap according to any one of claims 1 to 3, **characterized in that** the cavities or gaps (4) have a different format from the projections (3).

6. Cap according to any one of claims 1 to 5, **characterized in that** the body (1) has connection elements on all its surfaces - upper, lateral and/or lower - molded directly in its structure.

7. Cap according to any one of claims 1 to 6, **characterized in that** the projections, the pins or the gaps (3, 4 or 5) occupy the total surface area of the body (1).

8. Cap according to any one of claims 1 to 6, **characterized in that** the projections, the pins or the gaps (3, 4 or 5) occupy only the peripheral region of the surface (1) so that the central region (9) remains free to receive inscriptions, engravings, or various applications.

9. Cap according to any one of claims 1 to 6, **characterized in that** the body (1) has a lateral skirt (8) provided with interlocking projections of the male (10.1) and female (10.2) type.

10. Cap according to any one of claims 1 to 6, **characterized in that** the body (1) has a lateral skirt (8) provided with vertical locking elements (11) that are identical and self-coupling to each other.

11. Cap according to any one of claims 1 to 6, **characterized in that** the surface (2) of the body (1) has four perimeter projections (5) arranged around a central projection (5.1).

12. Cap according to any one of claims 1 to 6, **characterized in that** it contains two perimeter projections (5) provided with "male" type projections (12) for coupling in the "female" type internal region (13) of the other projections (5).

13. Cap according to any one of claims 1 to 6, **characterized in that** the perimeter projections (5) contain proximal cavities (14) located in mutually orthogonal positions for coupling of the positioners (15) present at the lower end of the internal surface (16) of the body (1).

14. Cap according to any one of claims 1 to 6, **characterized in that** the cavities (14) and the positioners (15) have any given geometrical conformation, as long as they are self-coupling.

15. Cap according to any one of claims 1 to 6, **characterized in that** the body (1) contains an inner cylinder (17) as an auxiliary element for coupling of the caps.

16. Cap according to any one of claims 1 to 6, **characterized in that** the inner cylinder (17) is employed as a compartment for placement of any given objects and closed by removable plastic film (F) or similar sealing element.

17. Cap according to any one of claims 1 to 6, **characterized in that** the body (1) contains interlocking elements (10.1, 10.2 or 11) arranged on its upper surface (2).
